# EUROPÄISCHE PATENTSCHRIFT

(11) **EP 4 101 276 B1**
(45) Veröffentlichungstag und Bekanntmachung des Hinweises auf die Patenterteilung: **31.07.2024**
(21) Anmeldenummer: 22173584.8
(22) Anmeldetag: 16.05.2022
(51) Int. Cl.: A01B 73/00

(54) **ANBAUGERÄT ZUR FELDBEARBEITUNG**
FIELD WORKING ATTACHMENT
APPAREIL ACCESSOIRE DESTINÉ AU TRAITEMENT DU SOL

(30) Priorität: 04.06.2021 DE 102021114433
(43) Veröffentlichungstag der Anmeldung: 14.12.2022
(73) Patentinhaber: Maschinenfabrik Bernard Krone GmbH & Co. KG, 48480 Spelle (DE)
(72) Erfinder: Buddendick, Michael, 48683 Ahaus (DE); Bolsmann, Martin, 49832 Andervenne (DE); Ester, Markus, 49832 Beesten (DE); Rickert, Clemens, 48683 Ahaus (DE); Ahlmer, Frank, 49492 Westerkappeln (DE); Schnelting, Mathias, 46354 Südlohn-Oeding (DE)

(56) Entgegenhaltungen:
- EP-A1- 3 669 624
- FR-A1- 3 023 675
- GB-A- 2 176 981

## Beschreibung

Die vorliegende Erfindung betrifft ein Anbaugerät zur Feldbearbeitung nach dem Oberbegriff von Anspruch 1.

In der Landwirtschaft werden zur Bearbeitung eines Feldes unterschiedliche Maschinen eingesetzt. Hierzu zählen z.B. selbstfahrende Maschinen, die einen eigenen Fahrantrieb aufweisen sowie eine integrierte Vorrichtung zur Feldbearbeitung, oder gezogene Maschinen, die keinen eigenen Fahrantrieb aufweisen, sondern von einem Traktor bzw. Schlepper gezogen werden. Außerdem existieren Vorsatz- bzw. Anbaugeräte, die für einen bestimmten Einsatz an eine Landmaschine wie einen Traktor, einen Mähdrescher oder dergleichen angekoppelt werden, wobei die Landmaschine das Anbaugerät wenigstens teilweise, normalerweise vollständig stützt bzw. trägt. D.h. das Anbaugerät ruht in der Regel im Einsatz nicht oder nur teilweise auf einem eigenen Fahrwerk.

Viele Anbaugeräte sind aufgrund ihrer Breite in angekoppeltem Zustand nicht für den Straßenverkehr zugelassen. Das Anbaugerät muss in diesem Fall abgekoppelt und auf einen eigens vorgesehenen Transportwagen geladen werden. Letzterer weist eine Deichsel auf, durch die es von einem Schlepper gezogen werden kann. Normalerweise ist das Anbaugerät auf dem Transportwagen um 90° gegenüber seiner Position bei der Feldbearbeitung gedreht, wodurch das Breitenproblem gelöst ist. Der Einsatz eines Transportwagens bringt allerdings verschiedene Nachteile mit sich. Hierzu zählen die Anschaffungskosten für einen Wagen, dem lediglich eine Hilfsfunktion zukommt. Außerdem muss der Wagen bei jedem Einsatz auf einem geeigneten Platz in Feldnähe abgestellt werden, was aufgrund der unter Umständen erheblichen Dimensionen problematisch ist. Außerdem muss das Anbaugerät bei jedem Einsatz vom Transportwagen abgeladen und nach dem Einsatz wieder auf diesen aufgeladen werden, was ein hohes Maß an Präzision erfordert und somit zeitaufwendig ist. Alternativ zum Einsatz eines Transportwagens können manche Anbaugeräte auch für die Straßenfahrt an der Landmaschine verbleiben, wobei wenigstens Teile des Anbaugeräts in eine spezielle Position geschwenkt werden müssen. Auch dies ist allerdings mit Nachteilen verbunden. Das Gewicht des Anbaugeräts lastet auf der Landmaschine, so dass unter Umständen eine zusätzliche Achse notwendig ist, um die Achslast zu begrenzen. Auch ist der Schwenkmechanismus technisch aufwendig und das geschwenkte Anbaugerät schränkt das Sichtfeld des Fahrers ein, insbesondere wenn es an der Vorderseite der Landmaschine angekoppelt ist.

Die Druckschrift EP 3 669 624 A1 offenbart ein Vorsatzgerät für eine Erntemaschine, das ein Fahrwerk aufweist, welches von einer Arbeitsposition in eine Transportposition überführbar ist, so dass das Vorsatzgerät für einen Straßenbetrieb eingerichtet ist.

Aufgabe der Erfindung ist es, den Einsatz und Transport eines Anbaugeräts für eine Landmaschine zu vereinfachen.

Die Aufgabe wird gelöst mit einem Anbaugerät mit den Merkmalen des unabhängigen Patentanspruchs 1. Vorteilhafte Ausführungsformen sind den abhängigen Ansprüchen entnehmbar.

Dafür wird ein Anbaugerät zur Feldbearbeitung geschaffen, welches dazu eingerichtet ist, in einem Arbeitsmodus an eine Landmaschine gekoppelt und von dieser gestützt zu sein und in einem Transportmodus auf einem von der Landmaschine separaten Fahrwerk aufstehend von einem Schlepper gezogen zu werden, aufweisend einen Rahmen, der im Arbeitsmodus wenigstens indirekt an die Landmaschine gekoppelt ist.

Der Begriff "Landmaschine" ist in diesem Zusammenhang nicht einschränkend auszulegen und bezeichnet jede Maschine, die in der Landwirtschaft eingesetzt werden kann, z.B. einen Traktor oder Schlepper, eine Mähmaschine, ein Feldhäcksler etc. Das Anbaugerät ist zur Feldbearbeitung eingerichtet, also z.B. zum Mähen, Häckseln, Ernten, Säen etc., wobei die begrifflich nicht zwischen "Feld" und "Acker" unterschieden wird. Beim Anbaugerät kann es sich z.B. um ein Direktschneidwerk, eine Pick-up, einen Maisvorsatz, ein Getreideschneidwerk oder eine Traktoranbaumaschine wie Kreiselegge oder Sämaschine handeln. In einem Arbeitsmodus kann das Anbaugerät an die Landmaschine gekoppelt werden und wird von dieser gestützt bzw. getragen. Dabei ist es möglich, dass die Landmaschine nur einen Teil des Gewichts des Anbaugeräts trägt, bspw. derart, dass ein (normalerweise geringer) Anteil von einem (Hilfs-)Fahrwerk des Anbaugeräts getragen wird. Normalerweise ist das Anbaugerät allerdings im Arbeitsmodus vollständig durch die Landmaschine gestützt bzw. getragen. Die Kopplung an die Landmaschine ist zum einen statisch-mechanischer Art, zum anderen kann aber auch eine Kopplung zur Energie- bzw. Kraftübertragung in mechanischer, elektrischer, pneumatischer und/oder hydraulischer Form hergestellt werden. Das Anbaugerät kann insbesondere als Vorsatzgerät eingesetzt werden, also in Fahrtrichtung vorderseitig der Landmaschine, dies ist aber nicht zwangsläufig der Fall. Im Arbeitsmodus, also angekoppelt an die Landmaschine, ist die Breite des Anbaugeräts (also seine Dimension in Richtung der Querachse der Landmaschine) in der Regel deutlich größer als seine Länge (also seine Dimension in Richtung der Längsachse der Landmaschine), bspw. wenigstens doppelt so groß oder wenigstens dreimal so groß.

In einem Transportmodus kann das Anbaugerät auf einem von der Landmaschine separaten Fahrwerk aufstehend von einem Schlepper gezogen zu werden. Das Anbaugerät wird im Transportmodus also an einen Schlepper (bzw. eine Zugmaschine oder einen Traktor) angehängt und von diesem gezogen. Obgleich hier für die Landmaschine und den Schlepper unterschiedliche Begriffe verwendet werden, kann es sich hierbei in der Praxis um ein und dasselbe Fahrzeug handeln, welches im Arbeitsmodus das angekoppelte Anbaugerät trägt und im Transportmodus (über eine geeignete Anhängerkupplung) zieht. Wie nachfolgend noch ausgeführt wird, ist das Fahrwerk bevorzugt Teil des Anbaugeräts bzw. mit diesem permanent verbunden. In jedem Fall ist es nicht Teil der Landmaschine, sondern von dieser separat. Entsprechend wird das Anbaugerät bzw. dessen Gewicht nicht von der Landmaschine gestützt bzw. getragen, oder nur teilweise durch Kraftübertragung über die Deichsel, sofern die Landmaschine mit dem Schlepper identisch ist.

Das Anbaugerät weist einen Rahmen auf, der im Arbeitsmodus wenigstens indirekt an die Landmaschine gekoppelt ist. Der Rahmen ist normalerweise in sich starr ausgebildet und verleiht dem Anbaugerät mechanische Stabilität. Unterschiedliche bewegliche Teile können direkt oder indirekt an dem Rahmen gelagert sein, bspw. Messer eines Schneidwerks oder Häckslers, Zinken einer Pick-up oder dergleichen. Entsprechend der mechanischen Stabilität ist der Rahmen auch dasjenige Element, das direkt oder indirekt (über eine geeignete Kopplungsvorrichtung, die ggf. auch als Teil des Rahmens angesehen werden kann) an die Landmaschine angekoppelt wird. Diejenige Seite des Rahmens, die an die Landmaschine angekoppelt wird bzw. die in angekoppeltem Zustand zur Landmaschine hinweist, wird hier und nachfolgend als Ankopplungsseite bezeichnet.

Das Anbaugerät weist eine mit dem Rahmen verbundene Deichsel auf, die in einer dem Transportmodus entsprechenden Transportposition zur Kopplung an den Schlepper an einer Deichselseite vom Rahmen abragt, und die durch wenigstens einen Aktor in eine dem Arbeitsmodus entsprechende Arbeitsposition verstellbar ist, in der sie gegenüber der Transportposition wenigstens teilweise zum Rahmen hin verlagert ist. Die Deichsel ist (normalerweise permanent) mit dem Rahmen verbunden und wird somit als Teil des Anbaugeräts im Arbeitsmodus ebenfalls von der Landmaschine mitgetragen bzw. -gestützt. Diejenige Seite des Rahmens, von der die Deichsel in der Transportposition abragt (und mit der sie ggf. verbunden ist), wird hier als Deichselseite bezeichnet. Sie ist normalerweise eine Schmalseite des Rahmens und im Arbeitsmodus in Richtung der Querachse der Landmaschine seitlich angeordnet. In einer Transportposition, die dem Transportmodus entspricht, also für den Transportmodus eingenommen wird, ragt die Deichsel zur Kopplung an den Schlepper vom Rahmen ab. D.h. die Deichsel erstreckt sich ausgehend vom Rahmen von diesem fort, und zwar wenigstens anteilig in horizontaler Richtung. Die Richtung, in die die Deichsel hauptsächlich abragt, kann insbesondere bezogen auf den Arbeitsmodus der Querachse der Landmaschine entsprechen. Es versteht sich, dass die Räder des o.g. Fahrwerks im Transportmodus normalerweise in Richtung auf die Deichselseite orientiert sind, also in Richtung der eingeleiteten Zugkraft laufen können.

Die Deichsel ist allerdings verstellbar mit dem Rahmen verbunden bzw. verstellbar am Rahmen gelagert. Durch wenigstens einen Aktor kann sie aus der Transportposition in eine Arbeitsposition verstellt werden, die dazu vorgesehen ist, im Arbeitsmodus angenommen zu werden. Bevorzugt ist die Deichsel durch den wenigstens einen Aktor auch umgekehrt aus der Arbeitsposition in die Transportposition verstellbar. Die Arbeitsposition unterscheidet sich von der Transportposition dadurch, dass die Deichsel wenigstens teilweise zum Rahmen hin verlagert ist, was die Möglichkeit einschließt, dass wenigstens Teile der Deichsel, die in der Transportposition außerhalb des Rahmens angeordnet sind, in der Arbeitsposition innerhalb des Rahmens angeordnet sind. Normalerweise ist die Deichsel wenigstens überwiegend oder sogar vollständig zum Rahmen hin verlagert, also näher an diesem (oder darin) angeordnet. Somit kann die Deichsel in der Transportposition optimal für eine Ankopplung an den Schlepper sowie für ein Abschleppen des Anbaugeräts angeordnet sein, während sie in der Arbeitsposition in platzsparender Weise am Rahmen oder sogar innerhalb desselben angeordnet sein kann, so dass sie die Feldbearbeitung nicht stört. Da die Verstellung über einen Aktor bewirkt wird, ist eine Fernsteuerung des Verstellvorgangs z.B. aus der angekoppelten Landmaschine möglich.

Durch die Erfindung wird die Deichsel, die zum Anhängen an einen Schlepper bspw. für Straßenfahrt benötigt wird, in das Anbaugerät integriert. D. h. die Deichsel ist nicht Teil eines separaten Transportwagens, der die oben geschilderten Probleme mit sich bringt. Aufgrund der aktorischen Verstellbarkeit zwischen der Transportposition und der Arbeitsposition unterstützt die Deichsel das Ziehen mittels des Schleppers und stört dennoch nicht bei der Feldbearbeitung, da sie in der Arbeitsposition in platzsparender Weise am Rahmen angeordnet ist. Vorteilhaft kann die Deichsel durch ein ebenfalls verstellbar am Rahmen angeordnetes Fahrwerk ergänzt werden, dass weiter unten noch besprochen wird. In Kombination mit diesem wird ein Transportwagen völlig überflüssig gemacht und ein effizienter Wechsel zwischen Feldbearbeitung und Transport bzw. Straßenfahrt ermöglicht. Durch das von der Landmaschine separate Fahrwerk wird die Achslast der Landmaschine begrenzt, ohne dass diese eine zusätzliche Achse benötigt.

Die Deichsel ist schwenkbar mit dem Rahmen verbunden, also schwenkbar am Rahmen gelagert. Die Schwenkbarkeit kann dabei einen oder mehrere Freiheitsgrade aufweisen, wobei es sich gezeigt hat, dass sich eine optimale Positionierung sowohl in der Transportposition als auch in der Arbeitsposition mit nur einem Freiheitsgrad, also durch eine eindimensionale Schwenkbewegung, realisieren lässt. Je nach Bauart der Deichsel können ein oder mehrere Deichsel-Schwenklager vorgesehen sein.

Erfindungsgemäß ist vorgesehen, dass die Deichsel, bezogen auf die Ausrichtung des Anbaugeräts in der Transportposition, um eine schräg zur horizontalen Ebene verlaufende Schwenkachse schwenkbar ist. D.h., die Schwenkachse verläuft weder in der horizontalen Ebene noch senkrecht hierzu. Somit verläuft sie auch nicht vertikal, sondern schräg zur Vertikalen. Aufgrund dieser schrägstehenden Schwenkachse verläuft die Schwenkbewegung der Deichsel auch nicht in einer horizontalen oder vertikalen Ebene. Bevorzugt ist die Schwenkachse so ausgerichtet, dass sich die Deichsel beim Verstellen von der Transportposition in die Arbeitsposition schräg aufwärts bewegt, also aufwärts und gleichzeitig seitwärts. Bevorzugt ist die Schwenkachse gegenüber der Vertikalen von der Ankopplungsseite fort geneigt, wobei die Deichsel aus der Transportposition aufwärts sowie zur Ankopplungsseite hin in die Arbeitsposition schwenkbar ist. Insofern, als man dies auch als ein Zurückziehen der Deichsel zu einer Seite (z.B. zur Ankopplungsseite) ansehen kann, wird hier und im Folgenden auch von einer Rückzugsseite gesprochen.

Die Deichsel kann einen Primärträger mit einem Kopplungsteil zur Kopplung an den Schlepper aufweisen, welcher Primärträger über ein erstes Deichsel-Schwenklager mit dem Rahmen verbunden ist, sowie einen mit dem Primärträger starr verbundenen Sekundärträger, der mit dem Rahmen über ein zweites Deichsel-Schwenklager verbunden ist. Das Kopplungsteil kann bspw. eine Kugelpfanne, ein Kupplungsauge oder dergleichen aufweisen und kann auch einstückig mit dem Primärträger ausgebildet sein. Normalerweise ist der Primärträger dazu vorgesehen, den Hauptteil der Zugkraft zu übertragen, und ist daher in der Regel massiver ausgebildet als der Sekundärträger. Der Sekundärträger ist in der Regel nicht direkt mit dem Kopplungsteil verbunden. Er zweigt gewissermaßen vom Hauptträger ab. Seine Aufgabe kann darin bestehen, Anteile der Zugkraft aufzunehmen, aber insbesondere auch die Deichsel insgesamt zu versteifen bzw. zu stabilisieren. Insbesondere kann er sich (schräg) aufwärts vom Hauptträger erstrecken und dazu vorgesehen sein, vertikale Kraftkomponenten aufzunehmen. Eine wie oben beschrieben schräg verlaufende Schwenkachse kann bspw. dadurch realisiert werden, dass das zweite Deichsel-Schwenklager sowohl horizontal als auch vertikal gegenüber dem ersten Deichsel-Schwenklager versetzt angeordnet ist. Wenn die Deichsel aufwärts sowie zur Rückzugsseite bzw. Ankopplungsseite hin schwenken soll, kann das zweite Deichsel-Schwenklager gegenüber dem ersten Deichsel-Schwenklager nach oben sowie zu einer der Rückzugsseite bzw. Ankopplungsseite gegenüberliegenden Seite hin versetzt sein. Beide Deichsel-Schwenklager können bevorzugt als Schwenklager mit einem Freiheitsgrad ausgestaltet sein.

Um das stabile Abstellen des Anbaugeräts vor dem Ankoppeln an die Landmaschine bzw. nach dem Abkoppeln von der Landmaschine zu erleichtern, ist bevorzugt ein Stützfuß vorgesehen, mittels dessen das Anbaugerät in der Transportposition abstützbar ist. D.h. in der Transportposition kann sich das Anbaugerät zumindest über das Fahrwerk und über den Stützfuß abstützen. Der Stützfuß kann unabhängig von der Deichsel mit dem Rahmen verbunden sein oder er kann mit der Deichsel verbunden sein. In jedem Fall ist es bevorzugt, dass der Stützfuß zwischen der Transportposition und der Arbeitsposition verstellbar ist. Z.B. kann er in der Transportposition abwärts vom Rahmen abragen und in der Arbeitsposition demgegenüber aufwärts verstellt bzw. verschwenkt sein. Die Verstellbewegung des Stützfußes kann (z.B. mechanisch) an die Verstellbewegung der Deichsel gekoppelt sein. Eine bevorzugte Ausgestaltung sieht vor, dass der Stützfuß schwenkbar mit der Deichsel verbunden ist, wobei der Stützfuß in der Transportposition abwärts von der Deichsel abragt und in der Arbeitsposition demgegenüber zur Deichsel hin geschwenkt ist. Der Stützfuß kann sich dabei in der Transportposition näherungsweise senkrecht von der Deichsel abwärts erstrecken, was für die Aufnahme vertikaler Kraftkomponenten vorteilhaft ist. Insbesondere kann der Stützfuß mit dem o.g. Primärträger verbunden sein und von diesem abwärts abragen. Beim Verstellen in die Arbeitsposition schwenkt der Stützfuß relativ zur Deichsel, und zwar derart, dass er zur Deichsel hin schwenkt, also näher an der Deichsel angeordnet ist. Unter Umständen können auch wenigstens Teile des Stützfußes in der Arbeitsposition innerhalb der Deichsel angeordnet sein. Je nach Ausführungsform kann der Stützfuß zum rahmenseitigen Ende der Deichsel oder zum rahmenfernen Ende der Deichsel hin schwenken.

Die Verstellung des Stützfußes kann u.U. über einen eigens hierfür vorgesehenen Aktor erfolgen, was aber einen zusätzlichen konstruktiven Aufwand und hiermit verbundene Kosten bedeutet. Gemäß einer bevorzugten Alternative ist der Stützfuß über ein Verbindungselement derart mit dem Rahmen verbunden, dass das Schwenken des Stützfußes mechanisch an das Schwenken der Deichsel gekoppelt ist. D.h. es besteht eine mechanische Verbindung zwischen dem Stützfuß einerseits und dem Rahmen andererseits, wodurch sich eine Kraft im Verbindungselement ergibt, wenn sich der Stützfuß zusammen mit der Deichsel relativ zum Rahmen bewegt. Dies wird genutzt, um den Stützfuß wie vorgesehen zu verstellen.

Es wäre z.B. denkbar, dass das Verbindungselement als Zugseil ausgebildet ist, was allerdings im Wesentlichen nur die Übertragung einer Zugkraft ermöglicht und somit kaum eine Verstellung in beide Richtungen zulässt. Bevorzugt ist das Verbindungselement starr ausgebildet und ist sowohl mit dem Rahmen als auch mit dem Stützfuß über jeweils ein Gelenklager verbunden. "Starr" bedeutet in diesem Zusammenhang, dass das Verbindungselement keine nennenswerte Verformung erfährt, welche seine Funktion beeinflusst. Es kann beispielsweise stangen- oder stabförmig ausgebildet sein. Die Verbindung mit dem Stützfuß, dessen Schwenkbewegung i.Allg. in einer anderen Ebene verläuft als die der Deichsel, macht eine Verbindung über einfache Schwenklager (mit einem Freiheitsgrad) normalerweise unmöglich. Aus diesem Grund erfolgt die Anbindung über Gelenklager (mit mehreren Freiheitsgraden), z.B. über Kugelgelenke oder dergleichen. Das starre Verbindungselement kann sowohl Zug- als auch Druckkräfte übertragen, womit es die Verstellung des Stützfußes sowohl in die Arbeitsposition als auch in die Transportposition bewirken kann.

Der Stützfuß kann seinerseits mehrteilig ausgebildet sein, bspw. kann er einen Fußabschnitt aufweisen, der dazu ausgebildet ist, auf dem Boden aufzustehen, sowie einen Beinabschnitt, gegenüber dem der Fußabschnitt verstellbar ist, um die Länge des Stützfußes anzupassen. Außerdem kann ein Anbindungsabschnitt vorgesehen sein, an dem das Verbindungselement ansetzt und der schwenkbar mit der Deichsel verbunden ist. Der Beinabschnitt kann seinerseits gegenüber dem Anbindungsabschnitt schwenkbar sein, um bei Bedarf den Stützfuß unabhängig vom Verbindungselement schwenken zu können. Letzteres ist dann vorteilhaft, wenn das Anbaugerät vom Schlepper gezogen wird. Die Deichsel befindet sich hierbei selbstverständlich in der Transportposition, so dass der Stützfuß normalerweise abwärts abragen würde, um die Deichsel abzustützen. Dies kann aber während der Fahrt hinderlich sein, so dass eine vom Verbindungselement unabhängige Schwenkbarkeit des Stützfußes vorgesehen sein sollte.

Bevorzugt ist ein Linearaktor wenigstens indirekt einerseits an den Rahmen und andererseits an die Deichsel gekoppelt, so dass die Deichsel durch den Linearaktor schwenkbar ist. D.h. der Schwenkvorgang kann durch einen einzigen Linearaktor bewirkt werden. Der Linearaktor kann z.B. als elektrischer, pneumatischer oder insbesondere hydraulischer Zylinder ausgebildet sein. Die Linearbewegung wird - direkt oder indirekt - in eine Schwenkbewegung der Deichsel umgesetzt. Insbesondere kann der Linearaktor doppeltwirkend ausgebildet sein, so dass er sowohl Zug- als auch Druckkräfte erzeugen kann, um die beidseitige Schwenkbewegung zu unterstützen.

Hinsichtlich der Kraftübertragung vom Linearaktor auf den Rahmen sowie die Deichsel sind unterschiedlichste Möglichkeiten gegeben. Insbesondere ist zu unterscheiden zwischen direkter und indirekter Kraftübertragung. Gemäß einer vorteilhaften Ausgestaltung wirkt der Linearaktor auf einen Umlenkhebel, der schwenkbar mit dem Rahmen verbunden ist und über einen Lenker mit der Deichsel verbunden ist. D.h. die Kraftübertragung vom Linearaktor auf die Deichsel erfolgt über zwei zwischengeordnete Bauteile, nämlich zum einen den Umlenkhebel, der schwenkbar mit dem Rahmen verbunden ist. Für die Anbindung kann ein Umlenkhebel-Schwenklager eingesetzt werden, das lediglich einen Freiheitsgrad aufweist. Zum anderen erfolgt die Kraftübertragung vom Umlenkhebel auf die Deichsel über einen Lenker. Dieser ist über ein erstes Lenker-Schwenklager mit dem Umlenkhebel verbunden und über ein zweites Lenker-Schwenklager mit der Deichsel. Unter Umständen kann jedes der Lenker-Schwenklager lediglich einen Freiheitsgrad aufweisen, je nach Ausführungsform kann es auch günstig sein, dass wenigstens ein Lenker-Schwenklager mehrere Freiheitsgrade aufweist und bspw. als Gelenklager ausgebildet ist. Von besonderer Bedeutung ist diesem Zusammenhang der schwenkbare Umlenkhebel, in dem der Linearaktor ein Drehmoment erzeugt. Je nach räumlicher Anordnung der verschiedenen Schwenklager führt die Kraft des Linearaktors unter Umständen zu einer größeren oder kleineren Kraft auf den Lenker. Außerdem ist eine Kraftumlenkung möglich, so dass eine optimale Zug- bzw. Druckwirkung auf die Deichsel ausgeübt werden kann. Der Lenker ebenso wie der Umlenkhebel sind normalerweise als starre Bauteile ausgebildet, d. h. sie erfahren keine nennenswerte Verformung beim Normalbetrieb. Optional kann bspw. die Länge des Lenkers justierbar, also einstellbar sein. Die entsprechende Justierung ist allerdings in dem Fall nur von Hand am Lenker selbst möglich und erfolgt somit nicht dynamisch während des Betriebs.

Bevorzugt sind der Linearaktor und der Umlenkhebel auf einer horizontal seitlich der Deichselseite angeordneten Rückzugseite mit dem Rahmen verbunden. Wie bereits oben erwähnt, ist die Rückzugseite diejenige Seite, zu der die Deichsel hin geschwenkt wird, und kann mit der Ankopplungsseite identisch sein. Linearaktor und Umlenkhebel setzen also nicht oberseitig oder auf der Deichselseite am Rahmen an, sondern auf einer Seite, die gewissermaßen quer zur Deichselseite angeordnet ist.

In einer nicht in der Erfindung umfassten Ausführungsform ist anstatt einer Schwenkbarkeit der Deichsel auch eine Verschiebbarkeit möglich. Gemäß einer solchen Ausführungsform weist der Rahmen ein Führungsprofil auf, entlang dessen die Deichsel zwischen der Arbeitsposition und der Transportposition verschiebbar ist. Die Deichsel kann ein eigens hierfür vorgesehenes komplementäres Profil aufweisen, das mit dem Führungsprofil des Rahmens zusammenwirkt. Es wäre aber auch möglich, dass das Führungsprofil an die Außenkontur eines Primärträgers der Deichsel angepasst ist, bspw. derart, dass beide ein Vierkantprofil aufweisen. Bei dieser Ausführungsform ist der oben erwähnte Sekundärträger unnötig. Beim Verstellen in die Arbeitsposition kann die Deichsel überwiegend oder sogar vollständig in bzw. unter den Rahmen zurückgezogen werden, während sie beim Verstellen in die Transportposition ausgefahren wird. Das Ein- bzw. Ausfahren kann durch einen Linearaktor, bspw. einen Hydraulikzylinder, erfolgen, der innerhalb des Führungsprofils oder auf einer der Deichsel gegenüberliegenden Seite des Führungsprofils angeordnet sein kann. Auch ein Schwenken eines Stützfußes ist bei dieser Ausführungsform möglich, wobei unterschiedlichste Mechanismen denkbar sind. Gemäß einer Ausführungsform ist ein Verriegelungshebel schwenkbar mit dem Stützfuß verbunden, wobei die Deichsel eine Führungskulisse zur Führung des Verriegelungshebels aufweist. Die Führungskulisse kann Strukturen aufweisen, die im Zusammenwirken mit dem Verriegelungshebel dazu dienen, in der Transportposition den Stützfuß zu verriegeln. Außerdem kann der Verriegelungshebel mit einem Teil des Rahmens, bspw. dem Führungsprofil, zusammenwirken, um den Schwenkvorgang des Stützfußes einzuleiten oder zu unterstützen.

Wie bereits oben erwähnt wurde, kann das Fahrwerk, auf welchem das Anbaugerät im Transportmodus aufsteht, verstellbar mit dem Rahmen verbunden sein. Die Verstellbarkeit, welche nicht Gegenstand der vorliegenden Anmeldung ist, kann über ein oder mehrere hierfür vorgesehene Aktoren erfolgen. Gemäß einer bevorzugten Ausgestaltung wirkt ein Kopplungsmechanismus zwischen der Deichsel und einem Arretierungselement, um das Fahrwerk am Rahmen zu arretieren, wenn die Deichsel in der Transportposition ist, und ein Verstellen des Fahrwerks freizugeben, wenn die Deichsel in die Arbeitsposition verstellt wird. Das entsprechende Arretierungselement arretiert das Fahrwerk gegenüber dem Rahmen und verhindert somit ein Verstellen des Fahrwerks aus einer Transportposition, in welcher es den Rahmen abstützt, in eine Arbeitsposition, in der es bspw. freitragend am Rahmen gehalten sein kann. Das Arretierungselement übt somit vor allen Dingen eine Sicherungsfunktion aus. Über den Kopplungsmechanismus, der bspw. einfach mechanisch mittels einer Kopplungsstange oder einem Zugseil wirken kann, wird das Arretierungselement gewissermaßen entriegelt, wenn die Deichsel in die Arbeitsposition verstellt wird. D.h., das Verstellen der Deichsel in die Arbeitsposition ist Vorbedingung dafür, dass das Fahrwerk verstellt werden kann.

Dabei ist es bevorzugt, dass die Verstellung der Deichsel automatisch, insbesondere von einer Fahrerkabine aus, durchführbar ist. Dafür werden der eine oder die mehreren Aktoren angesteuert. Um die Deichsel von der Arbeitsposition in die Transportposition oder zurück zu verstellen, muss der Fahrer die Fahrerkabine daher nicht verlassen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung eines erfindungsgemäßen Anbaugeräts gemäß einer ersten Ausführungsform mit einer Deichsel in einer Transportposition;
- Fig. 2: eine Seitenansicht eines Teils des Anbaugeräts aus Fig. 1;
- Fig. 3: eine perspektivische Darstellung des Anbaugeräts aus Fig. 1 mit der Deichsel in einer Arbeitsposition;
- Fig. 4: eine Seitenansicht eines Teils des Anbaugeräts entsprechend Fig. 3;
- Fig. 5: eine Schnittdarstellung eines Teils eines erfindungsgemäßen Anbaugeräts gemäß einer zweiten Ausführungsform mit einer Deichsel in einer Transportposition; sowie
- Fig. 6: eine Fig. 5 entsprechende Schnittdarstellung mit der Deichsel in einer Zwischenposition.

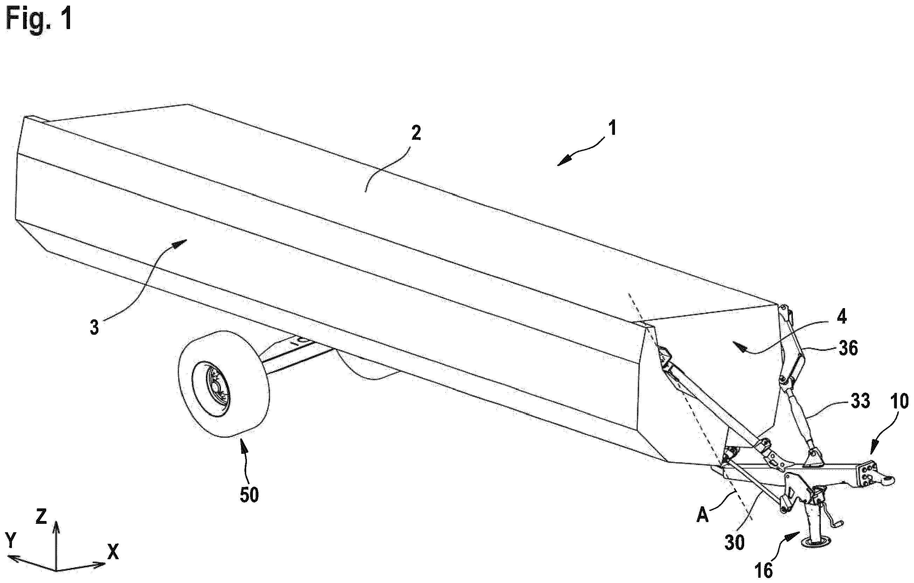

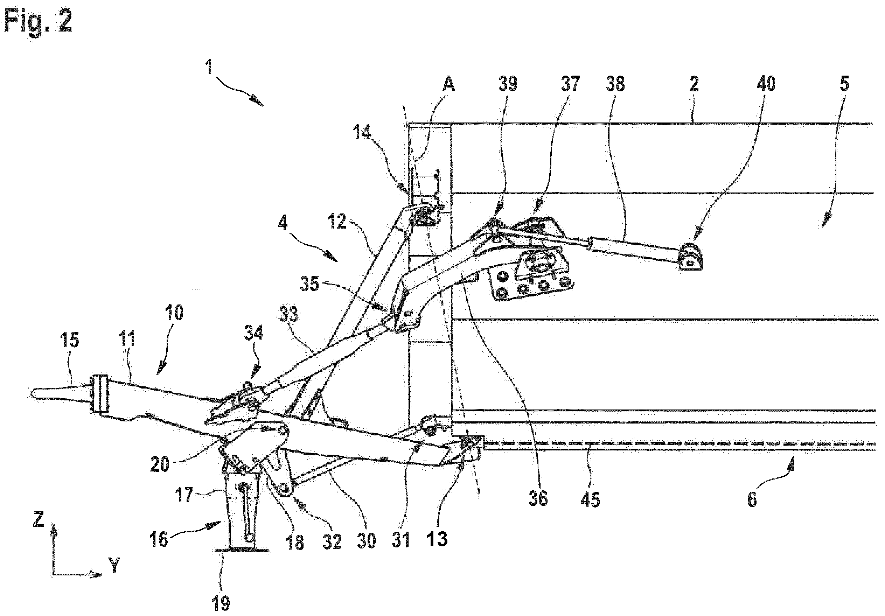

Fig. 1 - 4 zeigen eine erste Ausführungsform eines erfindungsgemäßen Anbaugeräts 1, in diesem Fall eines Erntevorsatzes für einen (hier nicht dargestellten) Feldhäcksler. Das Anbaugerät 1 weist einen Rahmen 2 auf, der in einem Arbeitsmodus mit einer Ankopplungsseite 5 an den Feldhäcksler gekoppelt wird. In diesem Arbeitsmodus ist das Anbaugerät 1 freitragend durch den Feldhäcksler gestützt. In den Figuren sind bezogen auf den angekoppelten Zustand des Anbaugeräts 1 die Längsachse X, die Querachse Y sowie die Hochachse Z des Feldhäckslers eingezeichnet. Der Rahmen 2 ist in Richtung der Querachse Y deutlich länger als in Richtung der Längsachse X, so dass die Ankopplungsseite 5, ebenso wie eine gegenüberliegende Vorderseite 3, als Langseite des Rahmens 2 bezeichnet werden kann. Demgegenüber kann eine seitlich der Ankopplungsseite 5 angeordnete Deichselseite 4 als Schmalseite bezeichnet werden. Fig. 1 und 2 zeigen das Anbaugerät 1 entsprechend einem Transportmodus, in welchem es von einem (ebenfalls nicht dargestellten) Schlepper, bspw. dem Feldhäcksler selbst, gezogen werden kann. Die vorgesehene Fahrtrichtung entspricht dabei der Querachse Y, so dass bei Straßenfahrt eine zulässige Breite quer zur Fahrtrichtung nicht überschritten wird. Der Rahmen 2 steht auf einem Fahrwerk 50 auf, dass hier nur schematisch dargestellt ist. Es ist verstellbar zwischen einer Transportposition, welche bspw. in Fig. 1 dargestellt ist und in der es den Rahmen 2 an dessen Unterseite 6 stützt, und einer Arbeitsposition, in der es auf der Ankopplungsseite 5 seitlich des Rahmens 2 angeordnet ist. Der zugehörige Verstellmechanismus ist hier nicht dargestellt.

An der Deichselseite 4 ist eine Deichsel 10 mit dem Rahmen 2 verbunden und ragt in einer in Fig. 1 und 2 dargestellten Transportposition, die dem Transportmodus entspricht, vom Rahmen 2 ab. Die Deichsel 10 weist einen Primärträger 11 auf, der in der Transportposition in etwa entlang der durch die Querachse Y und die Hochachse Z aufgespannten Mittelebene des Anbaugeräts 1 verläuft. Er ist über ein erstes Deichsel-Schwenklager 13 mit dem Rahmen verbunden. Ein Sekundärträger 12 der Deichsel 10 ist starr mit dem Primärträger 11 verbunden und erstreckt sich von diesem schräg aufwärts zu einem zweiten Deichsel-Schwenklager 14, das sowohl horizontal als auch vertikal zum ersten Deichsel-Schwenklager 13 versetzt angeordnet ist. Die beiden Deichsel-Schwenklager 13, 14 definieren gemeinsam eine Schwenkachse A, die schräg zur horizontalen Ebene verläuft (welche durch die Längsachse X und die Querachse Y aufgespannt wird). Genauer gesagt ist sie von unten nach oben betrachtet von der Ankopplungsseite 5 fort geneigt.

Auf der Ankopplungsseite 5 ist ein Linearaktor, genauer gesagt ein bspw. hydraulisch wirkender Zylinder 38, angeordnet. Dieser ist über ein erstes Zylinder-Schwenklager 39 mit einem Umlenkhebel 36 und über ein zweites Zylinder-Schwenklager 40 mit dem Rahmen verbunden. Der Umlenkhebel 36 ist seinerseits über einen Umlenkhebel-Schwenklager 37 schwenkbar mit dem Rahmen 2 verbunden, so dass ein seitens des Zylinders 38 eingebrachtes Drehmoment eine Schwenkbewegung des Umlenkhebels 36 bewirkt. Der Umlenkhebel 36 ist wiederum über einen Lenker 33 mit dem Primärträger 11 der Deichsel 10 verbunden. Die Länge des Lenkers 33 kann, wie in den Figuren angedeutet, manuell justierbar sein. Dies ist aber rein optional und der Lenker 33 kann auch durch eine Stange fester Länge gebildet sein. Während des normalen Betriebs des Anbaugeräts 1 kann er ebenso wie der Umlenkhebel 36 als starr angesehen werden. Er ist über ein erstes Lenker-Schwenklager 34 mit der Deichsel 10 verbunden sowie über ein zweites Lenker-Schwenklager 35 mit dem Umlenkhebel 36. Die bisher genannten Schwenklager 34, 35, 37, 39, 40 können jeweils einen Freiheitsgrad aufweisen und somit eine Schwenkbewegung in einer Ebene erlauben. Das zweite Lenker-Schwenklager 35 kann unter Umständen auch mehrere Freiheitsgrade aufweisen. Ein Stützfuß 16 ist mit der Deichsel 10 verbunden und ragt abwärts vom Primärträger 11 ab. Ein Anbindungsabschnitt 18 des Stützfußes 16 ist über ein Stützfuß-Schwenklager 20 schwenkbar mit dem Primärträger 11 verbunden. Mit dem Anbindungsabschnitt 18 ist wiederum ein Beinabschnitt 17 verbunden und mit diesem wiederum ein Fußabschnitt 19, der die eigentliche Standfläche des Stützfußes 16 bildet. Der Fußabschnitt 19 kann manuell mittels einer Handkurbel gegenüber dem Beinabschnitt 17 ein- und ausgefahren werden, um die effektive Länge des Stützfußes 16 anzupassen. Der Beinabschnitt 17 ist gegenüber dem Anbindungsabschnitt 18 wahlweise schwenkbar oder arretierbar. In nichtarretiertem Zustand kann er unabhängig vom Anbindungsabschnitt 18 gegenüber der Deichsel 10 geschwenkt werden. Der Anbindungsabschnitt 18 ist über ein Verbindungselement 30 mit dem Rahmen 2 verbunden.

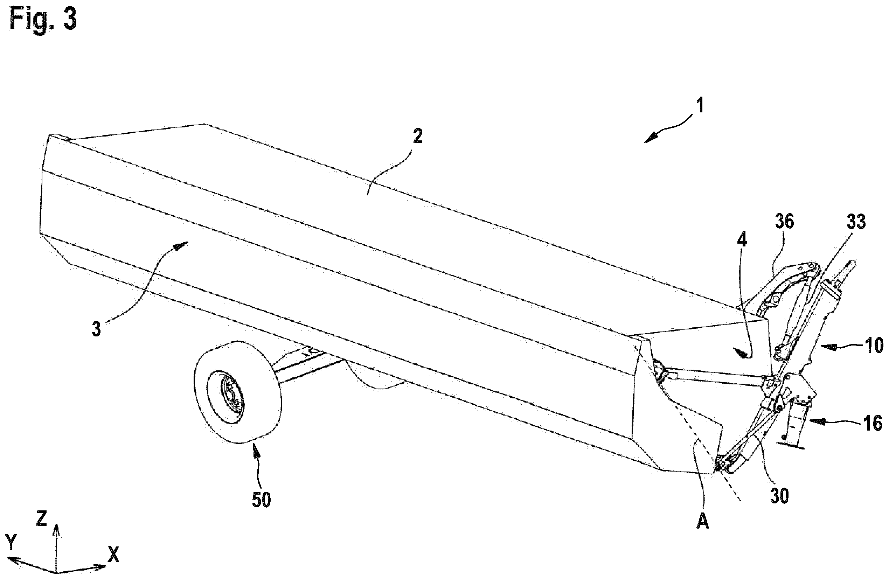

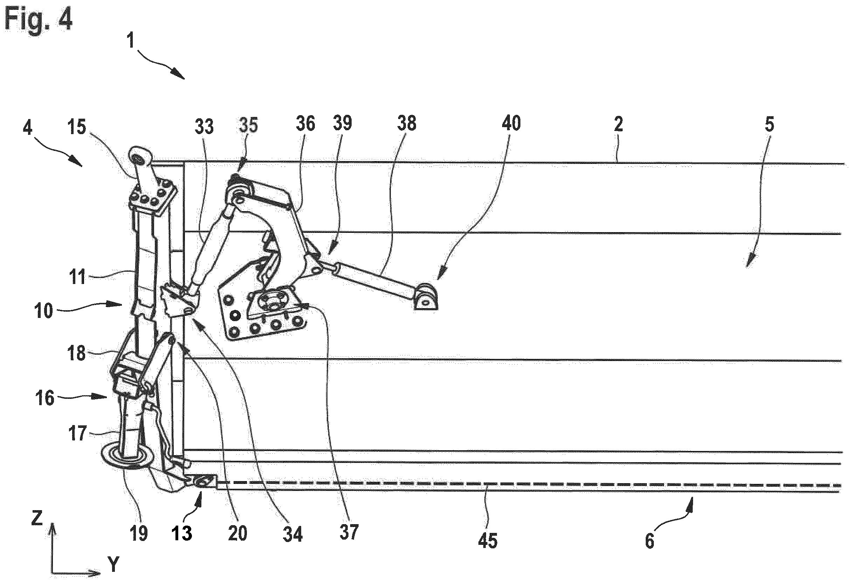

Wenn das Anbaugerät 1 zur Feldbearbeitung eingesetzt werden soll, wird es zunächst an den Feldhäcksler angekoppelt, so dass dieser es freitragend stützt. Anschließend kann vom Feldhäcksler aus, insbesondere von einer Fahrerkabine des Feldhäckslers aus, der Zylinder 38 angesteuert werden, um eine Verstellung der Deichsel 10 in eine in Fig. 3 und 4 dargestellte Arbeitsposition zu bewirken. Der Zylinder 38 zieht sich zusammen und übt eine Zugkraft auf den Umlenkhebel 36 aus, die über ein entsprechendes Drehmoment wiederum zu einer Zugkraft auf den Lenker 33 führt. Letztere führt wiederum zu einem Drehmoment auf die Deichsel 10 bezüglich der Schwenkachse A. Entsprechend schwenkt die Deichsel 10 zur Kopplungsseite 5, welche auch als Rückzugsseite bezeichnet werden kann, sowie aufwärts. Schließlich ist die Deichsel 10 wie in Fig. 4 erkennbar, benachbart zum Rahmen 2 angeordnet. Da der Anbindungsabschnitt 18 des Stützfußes 16 über das starre Verbindungselement 30 an den Rahmen 2 gekoppelt ist, wird im Zuge der Schwenkbewegung der Deichsel 10 auch eine Schwenkbewegung des Stützfußes 16 ausgelöst. Um diese zu realisieren, weisen die Verbindungselement-Gelenklager 31, 32 jeweils mehrere Freiheitsgrade auf, d.h. sie erlauben jeweils mehrdimensionale Schwenkbewegungen. Insgesamt wird der Stützfuß 16 zur Deichsel 10 hin geschwenkt, in diesem Fall zum ersten Deichsel-Schwenklager 13 hin. Es versteht sich, dass durch eine Modifikation des Verbindungselements 30 und/oder des Anbindungsabschnitts 18 auch ein Schwenken in entgegengesetzter Richtung, also zum Kopplungsteil 15 hin, möglich ist.

Die Deichsel 10 ist außerdem über einen Kopplungsmechanismus 45, der z.B. ein Zugseil aufweisen kann, an ein hier nicht dargestelltes Verriegelungselement gekoppelt, das das Fahrwerk 50 in der Transportposition am Rahmen 2 arretieren kann, z.B. über einen Formschluss. Wenn die Deichsel in der Transportposition ist, hält sie über den Kopplungsmechanismus 45 das Arretierungselement arretiert und verhindert so ein Verstellen des Fahrwerks 50. Wenn die Deichsel 10 in die Arbeitsposition verstellt wird, bedient sie über den Kopplungsmechanismus 45 das Arretierungselement und löst dieses, so dass ein Verstellen des Fahrwerks 50 in dessen Arbeitsposition freigegeben wird.

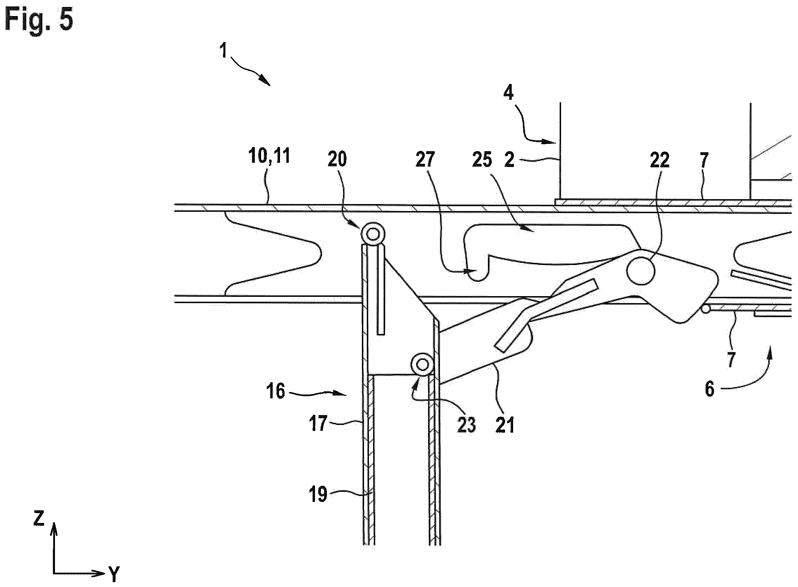

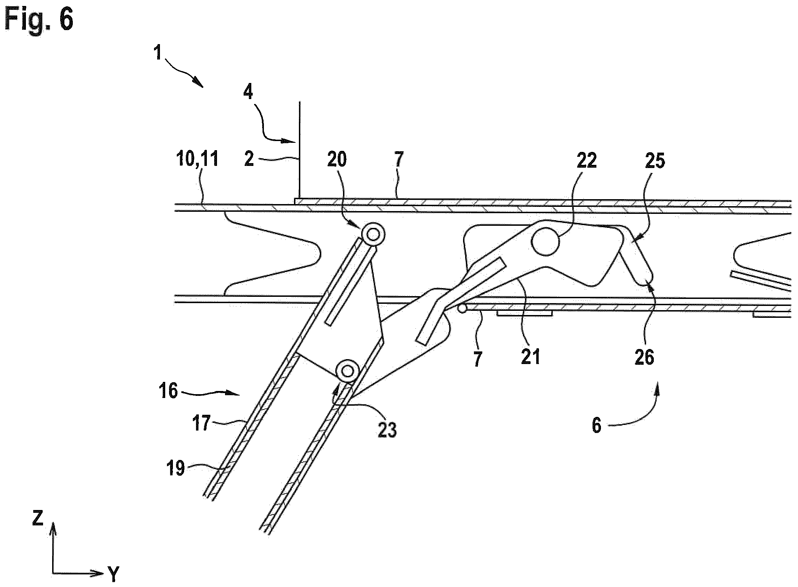

Fig. 5 und 6 zeigen Schnittdarstellungen eines Teils eines Anbaugeräts 1 gemäß einer zweiten Ausführungsform. In diesem Fall ist die Deichsel 10 nicht schwenkbar mit dem Rahmen 2 verbunden, sondern der Primärträger 11 ist verschiebbar in einem Führungsprofil 7 des Rahmens 2 gelagert. Die Verschiebung kann durch einen in den Figuren nicht gezeigten Linearaktor, bspw. einen Zylinder 38, bewirkt werden. Aufgrund der Konstruktion ist in diesem Fall keine Sekundärträger notwendig. Es ist wiederum ein Stützfußes 16 mit dem Primärträger 11 verbunden, wobei in diesem Fall lediglich ein Beinabschnitt 17 sowie ein Fußabschnitt 19 vorhanden sind, während der Anbindungsabschnitt entfällt. Ein Verriegelungshebel 21 ist über ein Verriegelungshebel-Schwenklager 23 schwenkbar mit dem Beinabschnitt 17 verbunden. Er greift mit einem Führungsstift 22 in eine Führungskulisse 25 des Primärträgers 11 ein. Außerdem kann er mit dem unteren Rand des Führungsprofil 7 zusammenwirken. In Fig. 5, in welcher die Deichsel 10 in ihrer Transportposition vollständig aus dem Rahmen 2 ausgefahren ist, ruht der Führungsstift 22 in einer ersten Raststruktur 26 der Führungskulisse 25. Das Zusammenwirken von Führungskulisse 25 und Verriegelungshebel 21 verhindert ein Schwenken des Stützfußes 16 zum Rahmen 2 hin, also bezogen auf die Zeichnung entgegen dem Uhrzeigersinn.

Der Stützfuß 16 kann allerdings manuell im Uhrzeigersinn geschwenkt werden, wobei der Verriegelungshebel 21 angehoben wird, so dass der Führungsstift aus der ersten Raststruktur 26 heraus gelangt. Beim weiteren Schwenken des Stützfußes 16 gelangt der Führungsstift 22 schließlich in eine zweite Raststruktur 27, wodurch der Stützfuß 16 in angehobener Position arretiert wird. Um den Stützfuß 16 wieder in die in Fig. 5 gezeigte Position zu verstellen, muss der Verriegelungshebel 21 leicht angehoben werden, so dass der Führungsstift 22 aus der zweiten Raststruktur 27 heraus gelangt. Beim Verstellen in die Arbeitsposition wird die Deichsel 10 überwiegend oder vollständig in das Führungsprofil 7 des Rahmens 2 hineingezogen. Sofern der Stützfuß 16 ausgeklappt ist, wirkt der Verriegelungshebel 21 mit der Kontur des Führungsprofils 7 zusammen, wodurch der Führungsstift 22 aus der ersten Raststruktur 26 herausgehoben wird. Fig. 6 zeigt eine Zwischenposition, bei welcher die Deichsel 10 teilweise eingefahren und der Stützfuß 16 teilweise hochgeklappt ist. Erkennbar wirkt der Verriegelungshebel 21 mit dem Führungsprofil 7 zusammen. Da gleichzeitig der Führungsstift 22 mit der Führungskulisse 25 zusammenwirkt, entsteht eine Hebelwirkung, die den Schwenkvorgang des Stützfußes 16 einleitet.

## Patentansprüche

1. Anbaugerät (1) zur Feldbearbeitung, welches dazu eingerichtet ist, in einem Arbeitsmodus an eine Landmaschine gekoppelt und von dieser gestützt zu sein und in einem Transportmodus auf einem von der Landmaschine separaten Fahrwerk (50) aufstehend von einem Schlepper gezogen zu werden, aufweisend einen Rahmen (2), der im Arbeitsmodus wenigstens indirekt an die Landmaschine gekoppelt ist, wobei dieses eine mit dem Rahmen (2) verbundene Deichsel (10) aufweist, die in einer dem Transportmodus entsprechenden Transportposition zur Kopplung an den Schlepper an einer Deichselseite (4) vom Rahmen (2) abragt, und die durch wenigstens einen Linearaktor (38) in eine dem Arbeitsmodus entsprechende Arbeitsposition verstellbar ist, in der sie gegenüber der Transportposition wenigstens teilweise zum Rahmen (2) hin verlagert ist, wobei die Deichsel (10) schwenkbar mit dem Rahmen (2) verbunden ist,
**dadurch gekennzeichnet, dass**
die Deichsel (10), bezogen auf die Ausrichtung des Anbaugeräts (1) in der Transportposition, um eine schräg zur horizontalen Ebene verlaufende Schwenkachse (A) schwenkbar ist.

2. Anbaugerät nach Anspruch 1, **dadurch gekennzeichnet, dass** die Deichsel (10) einen Primärträger (11) mit einem Kopplungsteil (15) zur Kopplung an den Schlepper aufweist, welcher Primärträger (11) über ein erstes Deichsel-Schwenklager (13) mit dem Rahmen verbunden ist, sowie einen mit dem Primärträger (11) starr verbundenen Sekundärträger (12), der mit dem Rahmen (2) über ein zweites Deichsel-Schwenklager (14) verbunden ist, das sowohl horizontal als auch vertikal gegenüber dem ersten Deichsel-Schwenklager (13) versetzt angeordnet ist.

3. Anbaugerät nach einem der vorangehenden Ansprüche, **dadurch gekennzeichnet, dass** ein Stützfuß (16) schwenkbar mit der Deichsel (10) verbunden ist, der in der Transportposition abwärts von der Deichsel (10) abragt und in der Arbeitsposition demgegenüber zur Deichsel (10) hin geschwenkt ist.

4. Anbaugerät nach Anspruch 3, **dadurch gekennzeichnet, dass** der Stützfuß (16) über ein Verbindungselement (30) derart mit dem Rahmen (2) verbunden ist, dass das Schwenken des Stützfußes (16) mechanisch an das Schwenken der Deichsel (10) gekoppelt ist.

5. Anbaugerät nach Anspruch 4, **dadurch gekennzeichnet, dass** das Verbindungselement (30) starr ausgebildet ist und sowohl mit dem Rahmen (2) als auch mit dem Stützfuß (16) über jeweils ein Gelenklager (31, 32) verbunden ist.

6. Anbaugerät nach einem der vorangehenden Ansprüche, **dadurch gekennzeichnet, dass** der Linearaktor (38) wenigstens indirekt einerseits an den Rahmen (2) und andererseits an die Deichsel (10) gekoppelt ist, so dass die Deichsel (10) durch den Linearaktor (38) schwenkbar ist.

7. Anbaugerät nach einem der vorangehenden Ansprüche, **dadurch gekennzeichnet, dass** der Linearaktor (38) auf einen Umlenkhebel (36) wirkt, der schwenkbar mit dem Rahmen (2) verbunden ist und über einen Lenker (33) mit der Deichsel (10) verbunden ist.

8. Anbaugerät nach Anspruch 7, **dadurch gekennzeichnet, dass** der Linearaktor (38) und der Umlenkhebel (36) auf einer horizontal seitlich der Deichselseite (4) angeordneten Rückzugseite (5) mit dem Rahmen (2) verbunden sind.

9. Anbaugerät nach einem der vorangehenden Ansprüche, **dadurch gekennzeichnet, dass** das Fahrwerk (50) verstellbar mit dem Rahmen (2) verbunden ist, wobei ein Kopplungsmechanismus (45) zwischen der Deichsel (10) und einem Arretierungselement wirkt, um das Fahrwerk (50) am Rahmen (2) zu arretieren, wenn die Deichsel (10) in der Transportposition ist, und ein Verstellen des Fahrwerks (50) freizugeben, wenn die Deichsel (10) in die Arbeitsposition verstellt wird.

## Claims

1. Field working attachment (1) which is designed to be coupled to and supported by an agricultural machine in a working mode and to be pulled by a tractor on a chassis (50), which is separate from the agricultural machine, in a transport mode, the attachment comprising a frame (2) which is at least indirectly coupled to the agricultural machine in the working mode, this attachment comprising a drawbar (10) which is connected to the frame (2), protrudes, on a drawbar side (4), from the frame (2) to be coupled to the tractor in a transport position corresponding to the transport mode and can be adjusted by at least one linear actuator (38) into a working position corresponding to the working mode, in which working position the drawbar is at least partly moved toward the frame (2) with respect to the transport position, the drawbar (10) being pivotally connected to the frame (2),
**characterized in that**
the drawbar (10) can be pivoted about a pivot axis (A) extending obliquely to the horizontal plane, relative to the orientation of the attachment (1) in the transport position.

2. Attachment according to claim 1, **characterized in that** the drawbar (10) comprises a primary support (11) having a coupling part (15) for being coupled to the tractor, which primary support (11) is connected to the frame via a first drawbar pivot bearing (13), and comprises a secondary support (12) which is rigidly connected to the primary support (11) and is connected to the frame (2) via a second drawbar pivot bearing (14) which is offset both horizontally and vertically with respect to the first drawbar pivot bearing (13).

3. Attachment according to either of the preceding claims,
**characterized in that** a support foot (16) is pivotally connected to the drawbar (10), which foot projects downward from the drawbar (10) in the transport position and is pivoted toward the drawbar (10) in the working position.

4. Attachment according to claim 3, **characterized in that** the support foot (16) is connected to the frame (2) via a connecting element (30) such that pivoting of the support foot (16) is mechanically coupled to pivoting of the drawbar (10).

5. Attachment according to claim 4, **characterized in that** the connecting element (30) is rigid and is connected both to the frame (2) and to the support foot (16) via a spherical plain bearing (31, 32) in each case.

6. Attachment according to any of the preceding claims,
**characterized in that** the linear actuator (38) is coupled at least indirectly on one side to the frame (2) and on the other side to the drawbar (10) so that the drawbar (10) can be pivoted by the linear actuator (38).

7. Attachment according to any of the preceding claims, **characterized in that** the linear actuator (38) acts on a deflection lever (36) which is pivotally connected to the frame (2) and is connected to the drawbar (10) via a connecting rod (33).

8. Attachment according to claim 7, **characterized in that** the linear actuator (38) and the deflection lever (36) are connected to the frame (2) on a retraction side (5) which is arranged horizontally to the side of the drawbar side (4).

9. Attachment according to any of the preceding claims,
**characterized in that** the chassis (50) is adjustably connected to the frame (2), a coupling mechanism (45) acting between the drawbar (10) and a locking element in order to lock the chassis (50) on the frame (2) when the drawbar (10) is in the transport position and to allow adjustment of the chassis (50) when the drawbar (10) is adjusted into the working position.

## Revendications

1. Equipement rapporté (1) pour les travaux des champs, conçu pour en mode de travail, être couplé à une machine agricole et soutenu par celle-ci et en mode de transport, s'appuyer sur un train de roulement (50) distinct de la machine agricole et être tiré par un tracteur, comprenant un châssis (2) qui,
* en mode de travail, est couplé au moins indirectement à la machine agricole, celui-ci comportant un timon (10) relié au châssis (2), et qui
* en position de transport correspondant au mode de transport, pour être couplé au tracteur, vient en saillie du côté de timon (4) du châssis (2) et qui peut être réglé dans une position de travail correspondant au mode de travail par un actionneur linéaire (38), position de travail dans laquelle il est décalé au moins partiellement du châssis (2) par rapport à la position de transport,
- le timon (10) étant relié de manière pivotante au châssis (2),
équipement **caractérisé en ce que**
le timon (10) est pivotant autour d'un axe de pivotement (A) incliné par rapport au plan horizontal, rapporté à la direction d'orientation de l'équipement (1) en position de transport.

2. Equipement rapporté selon la revendication 1,
**caractérisé en ce que** le timon (10) a :
- une poutre principale (11) avec une pièce de couplage (15) pour être couplée au tracteur, cette poutre principale (11) étant reliée au châssis par un premier palier de pivotement de timon (13), et
- une poutre secondaire (12) reliée à la poutre principale (11) et au châssis (2) par un second palier de pivotement de timon (14), et qui est décalé à la fois horizontalement et verticalement par rapport au premier palier de pivotement de timon (13).

3. Equipement rapporté selon l'une des revendications précédentes,
**caractérisé en ce que**
une jambe d'appui (16) est reliée de manière pivotante au timon (10), cette jambe venant en saillie en position de transport, à côté du timon (10) et elle peut être basculée en position active par rapport au timon (10).

4. Equipement rapporté selon la revendication 3,
**caractérisé en ce que**
la jambe d'appui (16) est reliée au châssis (2) par un élément de liaison (30) qui couple mécaniquement le basculement de la jambe d'appui (16) au basculement du timon (10).

5. Equipement rapporté selon la revendication 4,
**caractérisé en ce que**
l'élément de liaison (30) est rigide et relié à la fois au châssis (2) et aussi à la jambe d'appui (16) par un palier d'articulation (31, 32) respectif.

6. Equipement rapporté selon l'une des revendications précédentes,
**caractérisé en ce que**
l'actionneur linéaire (38) est couplé au moins indirectement d'un côté au châssis (2) et de l'autre au timon (10) de façon que le timon (10) puisse être pivoté par l'actionneur linéaire (38).

7. Equipement rapporté selon l'une des revendications précédentes,
**caractérisé en ce que**
l'actionneur linéaire (38) agit sur un levier de renvoi (36) relié de manière pivotante au châssis (2) et lui-même relié par un bras (33) au timon (10).

8. Equipement rapporté selon la revendication 7,
**caractérisé en ce que**
l'actionneur linéaire (38) et le levier de renvoi (36) sont reliés au châssis (2) par un côté de rappel (5) horizontale latéralement du côté timon (4).

9. Equipement rapporté selon l'une des revendications précédentes,
**caractérisé en ce que**
le train de roulement (50) est relié de manière réglable au châssis (2), un mécanisme de couplage (45) agissant entre le timon (10) et un élément de blocage pour bloquer le train de roulement (50) par rapport au châssis (2) lorsque le timon (10) est en position de transport et pour libérer le réglage du châssis (50) lorsque le timon (10) est mis en position de travail.
